# EUROPÄISCHE PATENTSCHRIFT

(11) **EP 2 387 292 B1**
(45) Veröffentlichungstag und Bekanntmachung des Hinweises auf die Patenterteilung: **14.12.2016**
(21) Anmeldenummer: 11165866.2
(22) Anmeldetag: 12.05.2011
(51) Int. Cl.: H05B 37/02, H05B 33/08

(54) **Schaltkreis zur Steuerung von Leuchtdioden und diesen enthaltender Leucht- und/oder Signalkörper**
Electronic circuit for controlling light diodes and light and/or signal bodies containing same
Circuit destiné à la commande de diodes luminescentes et dispositif d'éclairage et/ou de signalisation en étant équipé

(30) Priorität: 12.05.2010 DE 102010016928
(43) Veröffentlichungstag der Anmeldung: 16.11.2011
(73) Patentinhaber: Stahl, Robert, 92637 Weiden (DE)
(72) Erfinder: Stahl, Robert, 92637 Weiden (DE)
(74) Vertreter: Lermer, Christoph

(56) Entgegenhaltungen:
- EP-A1- 1 536 390
- WO-A1-2009/134885
- "MAX761/MAX762 - 12V/15V or Adjustable, High-Efficiency, Low IQ, Step-Up DC-DC Converters", , 1. Januar 1993 (1993-01-01), Seiten 1-12, XP055061037, 120 San Gabriel Drive, Sunnyvale, CA Gefunden im Internet: URL:http://datasheets.maximintegrated.com/ en/ds/MAX761-MAX762.pdf [gefunden am 2013-04-24]
- "HL-800 ATEX USER?S GUIDE", , 1. Oktober 2009 (2009-10-01), Seiten 1-2, XP055061039, P.O.B. 42, FIN-00381 Helsinki Gefunden im Internet: URL:http://www.mica.fi/en/data/HL-800ATEX- ENGL-2009.pdf [gefunden am 2013-04-24]

## Beschreibung

Die vorliegende Erfindung betrifft einen Schaltkreis zur Ansteuerung von Leuchtdioden, der eine optimale Ausnutzung einer beliebigen, von einer Energiequelle, insbesondere einem Energiespeicher, zur Verfügung gestellten Eingangsspannung ermöglicht und unabhängig von der Eingangsspannung eine konstante Helligkeit der Leuchtdioden gewährleistet. Die Erfindung betrifft weiterhin einen den erfindungsgemäßen Schaltkreis enthaltenden Leucht- und/oder Signalkörper sowie dessen Verwendung.

Um die Verkehrssicherheit bei Dunkelheit zu erhöhen, werden vielfach aktive und passive Leuchtkörper zur Kennzeichnung von Menschen und auch Tieren eingesetzt. Neben passiven Leuchtkörpern wie beispielsweise Reflektoren, kommen aktive Leuchtkörper zum Einsatz, die oftmals als batterie- oder akkumulatorbetriebene Leuchtdiodeneinheiten ausgebildet sind. Bei herkömmlichen batteriebetriebene Leucht- und Signalkörpern besteht das Problem jedoch darin, dass einerseits eine ausreichende, konstante und zuverlässige Beleuchtung zur Verfügung gestellt werden soll und andererseits das Gewicht des Leuchtkörpers begrenzt werden soll.

Ein Beispiel für einen herkömmlichen Leucht- und Signalkörper und eine Schaltung zur Ansteuerung der LEDs wird durch die EP 1 536 390 A1 beschrieben. Der Leucht- und Signal-körper, der insbesondere als Tierhalsband einsetzbar ist, sieht einen Bewegungsmelder vor, sodass das Leuchtdiodenmodul bei einer detektierten Bewegung des Umfelds oder bei einer Eigenbewegung eingeschaltet wird. Dadurch wird vermieden, dass das LED-Modul, wenn es nicht in Benutzung ist, leuchtet, um somit Energie einzusparen und die Zuverlässigkeit zu erhöhen.

Es besteht jedoch weiter das Problem, dass die in den Batterien bzw. Akkumulatoren vorhandene Energie nur zu einem Teil ausgenutzt wird. Dies liegt daran, dass eine Vorwärtsspannung der Leuchtdioden (LEDs) je nach Farbe in einem Bereich von 1,6 V - 3 V variiert, so dass die Batterien bzw. Akkumulatoren lediglich bis zu einer Schwellspannung, die der Höhe der Vorwärtsspannung der LEDs entspricht, entladen werden können. Somit ist eine Energiequelle nötig, die über einen längeren Zeitraum eine geeignete Spannung ausgibt. Die Verwendung leistungsstarker Energiequellen ist aber mit einer Erhöhung des Gewichts des Leucht- und Signalkörpers verbunden.

Außerdem hat der konventionelle Batteriebetrieb von Leucht- und Signalkörpern den Nachteil, dass die Helligkeit baugleicher Leucht- und Signalkörper stark variiert, da auch die Vorwärtsspannung von LEDs gleicher Farbe je nach Charge stark variiert. Diese Tatsache erweist sich als problematisch, da so keine zuverlässige Beleuchtung mit einer Mindesthelligkeit des Leucht- und Signalkörper gewährleistet werden kann.

Ein weiteres Problem des Stands der Technik liegt darin, dass bei einem konventionellen Batteriebetrieb mit zunehmender Betriebsdauer die Helligkeit des Leucht- und Signalkörpers stetig abnimmt. Hinzu kommt, dass aus dem Stand der Technik bekannte Schaltungen auch im Stand-by- oder Ruhemodus Strom verbrauchen, so dass nach einigen Wochen oder Monaten, in den der Leuchtkörper nicht in Betrieb ist, die Batterien entleert werden.

Die Druckschrift WO 2009/134885 offenbart einen Schaltkries zum Betreiben von LEDs, der durch Batterien oder Kondensatoren angetrieben wird. Der Schaltkreis umfasst einen Auf wärtswandler, deine Regelung zur Steuerung des Aufwärtswandlers in Abhängigkeit vom gemessenen Strom.

Ausgehend von konventionellen Schaltungen für Leucht- und Signalkörper ist es die Aufgabe der vorliegenden Erfindung, einen Schaltkreis zur Ansteuerung von Leuchtdioden zur Verfügung zu stellen, der die Probleme von aus dem Stand der Technik bekannten Leuchtkörpern beseitigt. Insbesondere besteht die Aufgabe des Schaltkreises darin, die zur Verfügung stehende, insbesondere gespeicherte, Energie optimal auszunutzen, eine über einen langen Zeitraum konstante Helligkeit der angesteuerten LEDs zu gewährleisten und die Helligkeit der angesteuerten LEDs verglichen mit den LEDs eines Leuchtkörpers desselben Bautyps so zu steuern, dass die Helligkeit baugleicher Leuchtkörper gleich ist. Eine weitere Aufgabe besteht darin, Leckströme in einem Stand-by- bzw. Ruhemodus weitgehend zu verhindern.

Diese Aufgabe wird durch den Schaltkreis zur Steuerung mindestens einer Leuchtdiode nach Anspruch 1 sowie den Leucht- und/oder Signalkörper nach Anspruch 8 gelöst. Vorteilhafte Weiterentwicklungen des Schaltkreises des Leucht- und/oder Signalkörpers werden in den jeweiligen abhängigen Ansprüchen gegeben.

Erfindungsgemäß weist der Schaltkreis zum Ansteuern mindestens einer Leuchtdiode, welche eine charakteristische Vorwärtsspannung aufweist, eine Energiequelle, erste Kontakte, an denen die Energiequelle angeschlossen ist, zweite Kontakte, an denen die mindestens eine Leuchtdiode angeschlossen ist, und einen Aufwärtswandler auf. Der Aufwärtswandler ist dabei so mit den ersten und mit den zweiten Kontakten verbunden, dass der Aufwärtswandler an einem Ausgang eine höhere Ausgangsspannung als die von der Energiequelle am Anschluss bereitgestellte Eingangsspannung erzeugt, die an die Vorwärtsspannung der mindestens einen Leuchtdiode angepasst ist, wobei der Aufwärtswandler konstanten Strom ausgibt. Der konstante Strom beträgt vorzugsweise 5 mA bis 50 mA, insbesondere 12 mA.

Der Schaltkreis und/oder der Aufwärtswandler weisen eine Vorrichtung zur Detektion einer Unterschreitung eines Grenzwertes der Eingangsspannung auf; der Schaltkreis weist weiterhin eine Schaltungseinheit zur Kenntlichmachung der Unterschreitung des Grenzwertes der Eingangsspannung auf, die insbesondere als Rückkopplung eines Eingangs und eines Ausgangs der Vorrichtung zur Detektion einer Unterschreitung eines Grenzwertes der Eingangsspannung insbesondere über einen Kondensator realisiert ist; und die Schaltungseinheit zur Kenntlichmachung der Unterschreitung des Grenzwertes der Eingangsspannung ist so mit den zweiten Kontakten verbunden, dass sie bei Unterschreitung des Grenzwertes ein Blinken der Leuchtdiode erzeugt.

Durch die erfindungsgemäße Verschaltung des Aufwärtswandlers wird ermöglicht, dass die Leuchtstärke der LEDs über einen variierenden Eingangsspannungsbereich von insbesondere 3,2 V bis 0,6 V, insbesondere 3,2 V bis 1 V, absolut konstant bleibt, da der Aufwärtswandler unabhängig von der Eingangsspannung einen konstanten Strom liefert. Aufgrund der Erhöhung der Eingangsspannung durch den Aufwärtswandler kann somit gleichzeitig die zur Verfügung stehende Energie der Energiequelle bzw. des Energiespeichers optimal ausgenutzt werden. Weiterhin ermöglicht die erfindungsgemäße Verwendung des Aufwärtswandlers, dass die Ausgangsspannung des Aufwärtswandlers an die Vorwärtsspannung der mindestens einen Leuchtdiode angepasst ist und somit die LEDs baugleicher Leucht- und/oder Signalkörper gleich hell leuchten.

Die ersten Kontakte sind vorzugsweise als Kontakte zum Anschließen eines Energiespeichers, insbesondere in Form mindestens einer Batterie oder eines Akkumulators ausgebildet. Insbesondere sind die ersten Kontakte so ausgebildet und angeordnet, dass mindestens eine, vorteilhafterweise zwei oder mehr, Batterien bzw. Akkumulatoren aufgenommen und angeschlossen werden können. Als Energiespeicher können auch Energiespeicher eingesetzt werden, die eine maximale Spannung zur Verfügung stellen, die niedriger ist als die charakteristische Vorwärtsspannung der mindestens einen LED.

Die zweiten Kontakte können so ausgebildet sein, dass sie eine oder mehrere, insbesondere vier, LEDs, insbesondere eine oder mehrere, insbesondere vier, farbige LEDs, in Parallelschaltung mit dem erfindungsgemäßen Schaltkreis verbinden. Sollen mehrere LEDs an den Schaltkreis anschließbar sein, so können die zweiten Kontakte derart ausgebildet sein, dass ein Flachkabel mit den LEDs kontaktierbar ist. Alternativ kann der Schaltkreis mehrere zweite Kontakte aufweisen, um die LEDs einzeln zu kontaktieren, wobei die zweiten Kontakte dabei bevorzugt derart angeordnet sind, dass sie eine Parallelschaltung einiger oder aller LEDs zueinander bilden.

Der erfindungsgemäße Schaltkreis kann einen Widerstand aufweisen, der so mit dem Auf wärtswandler verbunden ist, dass die an die Vorwärtsspannung der mindestens einen LED angepasste Ausgangsspannung mit Hilfe der an dem Widerstand abfallenden Spannung regelbar ist. Die Regelung des Aufwärtswandlers in Abhängigkeit von dem Spannungsabfall am Widerstand führt dazu, dass eine geeignete, an die Vorwärtsspannung der LEDs angepasste Ausgangsspannung einstellbar ist und ein konstanter Strom geliefert wird.

Im Detail kann der Widerstand so in den Schaltkreis eingebaut sein, dass er zwischen einen Regeleingang des Aufwärtswandlers und Masse geschalten ist. Die Verbindung des Widerstands nach Masse kann beispielsweise über einen Transistor erfolgen, um einen Spannungsteiler im Standby- oder Ruhezustand deaktivieren zu können. Vorzugsweise ist der Widerstand dabei in Reihe mit den zweiten Kontakten geschalten. Sind mehrere zweite Kontakte vorgesehen, so ist der Widerstand vorzugsweise in Reihe zu einer Parallelschaltung der zweiten Kontakte geschaltet. Es sind jedoch auch alternative Anordnungsmöglichkeiten des Widerstands, ggf. in Verbindung mit einer Messeinheit zur Messung des Spannungsabfalls, möglich.

Der Schaltkreis kann weiterhin mindestens ein Bauteil mit einer bestimmten Vorwärtsspannung, insbesondere ein Halbleiterbauteil mit einer bestimmten Schwellspannung eines Halbleiterübergangs, insbesondere mindestens eine Diode, beispielsweise eine Schottkydiode oder eine Doppelschottkydiode aufweisen, das zwischen dem Widerstand und dem Aufwärtswandler, insbesondere zwischen dem Widerstand und dem Regeleingang des Aufwärtswandlers geschaltet ist. Vorzugsweise enthält der Schaltkreis zwei oder mehr geeignete Bauteile wie beispielsweise zwei oder mehr Dioden. Das mindestens eine Bauteil mit bestimmter Vorwärtsspannung, insbesondere die mindestens eine Diode, ist dazu vorgesehen, dass der am Widerstand gemessene Spannungsabfall künstlich erhöht wird und somit eine hohe Verlustleistung am Widerstand vermieden wird. Dies hat eine Verlängerung der Laufzeit des Energiespeichers zur Folge.

Die Detektion der Unterschreitung eines Grenzwerts der Eingangsspannung, d. h. insbesondere der Batterie- oder Akkumulatorspannung, ermöglicht die Ausgabe eines Warnhinweises, um zu verhindern, dass der Leuchtkörper plötzlich aufgrund einer zu geringen Eingangsspannung von weniger als 1 V, insbesondere weniger als 0,6 V, aussetzt. Als Grenzwert kann bei der Verwendung von beispielsweise zwei Alkaline-Batterien eine Eingangsspannung im Bereich von 1,3 V bis 1,8 V, insbesondere 1,6 V, oder bei Verwendung von zwei Akkumulatoren eine Eingangsspannung im Bereich von 2,4 bis 2,6 V gewählt werden.

Um den Nutzer des Leuchtkörpers frühzeitig auf einen Wechsel der Energiequelle hinzuweisen, weist der Schaltkreis weiterhin eine Schaltungseinheit zur Kenntlichmachung der Unterschreitung des Grenzwerts der Eingangsspannung auf. Die Schaltungseinheit zur Kenntlichmachung des unterschrittenen Spannungsgrenzwerts ist mit den zweiten Kontakten verbunden, sodass die mindestens eine Leuchtdiode blinkt. Zusätzlich kann die Schaltungseinheit so ausgebildet sein, dass eine Zusatzleuchtdiode aktiviert wird und/oder ein akustisches und/oder ein taktiles Warnsignal ausgegeben wird. Durch die entsprechenden Signale kann dem Benutzer angezeigt werden, dass die LEDs nur noch für kurze Zeit, insbesondere weniger als eine Stunde, insbesondere weniger als 30 Minuten, leuchten. Die verbleibende Leuchtzeit richtet sich dabei nach dem gewählten Grenzwert. Die Helligkeit der LEDs kann während der verbleibenden Leuchtzeit merklich abnehmen.

Vorzugsweise kann die Schaltungseinheit zur Kenntlichmachung der Unterschreitung des Grenzwerts der Eingangsspannung als Rückkopplung eines Eingangs und eines Ausgangs der Detektionsvorrichtung über einen Kondensator realisiert sein. Insbesondere bei Verwendung eines Aufwärtswandlers mit integrierter Niederspannungsdetektion kann die Schaltungseinheit als Rückkopplung der entsprechenden Ein- und Ausgänge des Aufwärtswandlers über einen Kondensator ausgebildet sein. Diese Verschaltung bewirkt dann ein Blinken der mindestens einen LED.

Konventionelle Schaltungen von Leuchtkörpern verbrauchen auch im Stand-by- oder Ruhemodus Strom, sodass ein Energiespeicher, selbst wenn der Leuchtkörper nicht benutzt wird, nach einigen Wochen aufgrund von Leckströmen entleert wird. Der erfindungsgemäße Schaltkreis ist daher vorzugsweise so ausgebildet, dass im Standby- oder Ruhezustand des Schaltkreises Leckströme im Wesentlichen vermieden werden und lediglich ein Ruhestrom des Aufwärtswandlers fließt. Dies kann beispielsweise dadurch realisiert sein, dass der Schaltkreis einen Spannungsteiler und einen Transistor aufweist, die auf geeignete Art und Weise zwischen dem ersten Kontakt und dem Aufwärtswandler geschaltet sind, dass nur ein Ruhestrom des Aufwärtswandlers fließt. Der Ruhestrom des Aufwärtswandlers beträgt dabei höchstens 1 µA, insbesondere 0,5 µA oder weniger, sodass der Energiespeicher auch nach Monaten nur gering belastet wird und im Wesentlichen keine Entladung stattfindet.

Abhängig von der Verwendung eines Leuchtkörpers, der den erfindungsgemäßen Schaltkreis enthält, kann der Schaltkreis weiterhin einen automatischen oder manuellen Ein- und Ausschaltmechanismus aufweisen. Ein automatischer Ein- und Ausschaltmechanismus kann mindestens einen Sensor enthalten, durch den ein Schalter geschlossen wird, um den Aufwärtswandler zu aktivieren. Der mindestens eine Sensor kann dabei ausgewählt sein aus der Gruppe Bewegungssensor, Temperatursensor, Neigungssensor oder Infrarotsensor. Liefert der Sensor ein Signal, so wird der Schalter beispielsweise geschlossen. Anderenfalls, wenn der Sensor kein Signal liefert, schaltet der Schaltkreis automatisch ab. Vorzugsweise enthält der Ein- und Ausschaltmechanismus eine Kombination aus mehreren verschiedenen Sensoren. Zum Beispiel kann der Leuchtkörper über einen Bewegungssensor aktiviert werden, und ein zusätzlicher Lichtsensor sorgt dafür, dass dies nur bei Dunkelheit erfolgen kann.

Der Einschalt- und Ausschaltmechanismus kann eine Ausschaltverzögerung aufweisen, um zu gewährleisten, dass der Schaltkreis für eine bestimmte Zeit aktiviert bleibt, auch wenn der Sensor kein Signal ausgibt. Die Ausschaltverzögerung ist so ausgebildet, dass der Schaltkreis für ca. 5 Minuten, insbesondere ca. 1 Minute aktiviert bleibt.

Der Schaltkreis ist vorzugsweise auf einem Träger angeordnet. Als Träger bieten sich beispielsweise Platinen oder auch flexible Leiterbahnen an. Dies ermöglicht zum einen eine einfache Herstellung, da auf Platinen oder flexiblen Leiterbahnen Einzelteile des Schaltkreises maschinell angelötet sein können und somit lediglich einzelne Hauptverbindungen zwischen den Leiterplatten verlötet werden müssen. Zum anderen bieten flexible Leiterplatten die Möglichkeit, einen Leuchtkörper zu bilden, der sich an bestimmte Formen anpasst, sodass bspw. Bänder gebildet werden können.

Die vorliegende Erfindung betrifft weiterhin einen Leucht- und/oder Signalkörper mit mindestens einer Leuchtdiode, einer Energiequelle und einem erfindungsgemäßen Schaltkreis. Die Leuchtdiode ist dabei vorzugsweise eine farbige Leuchtdiode. Als Energiequelle kann ein Energiespeicher insbesondere in Form einer Batterie oder eines Akkumulators vorgesehen sein, wobei insbesondere Energiespeicher einsetzbar sind, die eine maximale Spannung zur Verfügung stellen, die niedriger ist als die charakteristische Vorwärtsspannung der mindestens einen LED. Vorzugsweise ist die Energiequelle aus zwei standardisierten Batterien oder entsprechenden Akkumulatoren ausgebildet. Der Schaltkreis ist so ausgebildet, dass er einen Aufwärtswandler aufweist, der die von der Energiequelle bereitgestellte Eingangsspannung auf eine an die Vorwärtsspannung der mindestens einen Leuchtdiode angepasste Ausgangsspannung erhöht und dabei einen konstanten Strom liefert. Der Schaltkreis kann sämtliche der oben genannten Merkmale einzeln oder getrennt voneinander aufweisen.

Der Leucht- und Signalkörper enthält vorzugsweise eine Vielzahl an Leuchtdioden, insbesondere vier Leuchtdioden. Diese sind vorteilhafterweise zum Teil oder alle parallel geschalten. Vorzugsweise besitzen alle LEDs die gleiche Vorwärtsspannung.

Der Leucht- und/oder Signalkörper weist vorzugsweise eine Hülle auf, in deren Inneren die Leuchtdioden, die Energiequelle sowie den Schaltkreis angeordnet sind. Die Hülle ist dabei vorzugsweise zumindest teilweise oder vollständig transparent, sodass eine ausreichende Ausleuchtung ermöglicht wird. Weiterhin kann die Hülle so ausgebildet sein, dass sie die Leuchtdioden, den Schaltkreis und/oder die Energiequelle feuchtigkeitsdicht, insbesondere hermetisch, umgibt, sodass eine Funktionsfähigkeit unabhängig von den Umgebungsbedingungen gewährleistet ist. Die Hülle ist vorzugsweise aus einem elastischen Material ausgebildet, so dass flexible Körper gebildet werden können, die ein Verletzungsrisiko verringern und die Stabilität des Leucht- und/oder Signalkörpers erhöhen.

Die Leuchtdioden, der Schaltkreis und die Energiequelle sind vorzugsweise ringförmig angeordnet. Weiterhin können die Leuchtdioden, der Schaltkreis und die Energiequelle elastisch miteinander verbunden sein. Dies kann vorzugsweise durch eine flexible Leiterplatine erfolgen, auf der die Leuchtdioden und der Schaltkreis aufgelötet sind. Die Leuchtdioden, der Schaltkreis und die Energiequelle sowie das Trägermaterial können dabei in der Hülle aufgenommen sein, so dass flexible Bänder, insbesondere Arm-, Fuß- oder Halsbänder, gebildet werden können. Somit wird eine geeignete Anbringung des Leuchtkörpers an einem Lebewesen, insbesondere einem Mensch oder einem Tier, oder einem bewegten Gegenstand ermöglicht. Flexible Bänder können angenehm um Hals, Arm oder Bein getragen werden oder einfach an einem sich bewegenden Gegenstand befestigt werden können.

Der beschriebene Leucht- und/oder Signalkörper kann bspw. zur Kennzeichnung eines sich bewegenden Gegenstands oder Lebewesens im Dunklen verwendet werden insbesondere als Kennzeichnung für einen Menschen oder ein Tier, insbesondere eines Hundes. Es ist dabei denkbar, dass ein Mensch den als Band ausgebildeten Leucht- und/oder Signalkörper an seinem Oberarm befestigt oder dass der Leucht- und/oder Signalkörper als Halsband für einen Hund ausgebildet ist.

Im Folgenden werden Ausführungsbeispiele eines erfindungsgemäßen Schaltkreises eines Leucht- und/oder Signalkörpers gegeben. Es zeigen:
- Figur 1: ein Blockschaltbild eines erfindungsgemäßen Leucht- und/oder Signalkörpers enthaltend den erfindungsgemäßen Schaltkreis zur Steuerung der LEDs; und
- Figur 2: eine Darstellung eines erfindungsgemäßen Leucht- und/oder Signalkörpers.

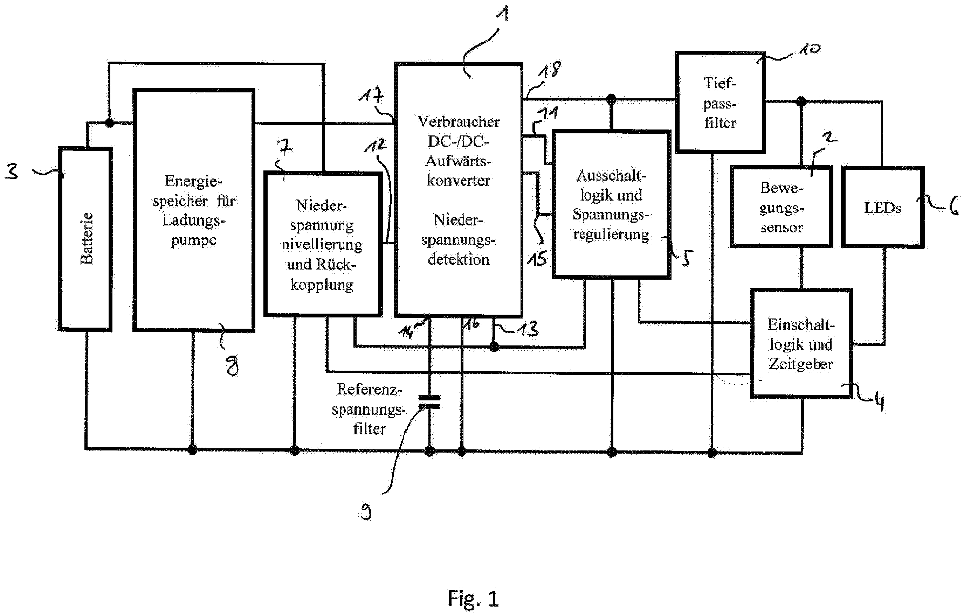

Figur 1 zeigt mittig einen Aufwärtswandler 1, der derart ausgebildet ist, dass er eine variable Eingangsgangsspannung in eine an eine Vorspannung der LEDs 6 angepasste erhöhte Ausgangsspannung umwandelt, wobei der gleichzeitig ausgegebene Strom konstant ist. Der Aufwärtswandler 1 weist die folgenden acht Kontakte auf: einen Regelungseingang 11; zwei Niederspannungsdetektionskontakte 12 und 13; einen Referenzspannungseingang 14; einen Aktivierungskontakt 15; einen Massekontakt 16; einen Eingangsspannungseingang 17; und einen Spannungsausgang 18. Die Anschlüsse 17 und 18 sind über eine Diode (nicht gezeigt) miteinander verbunden, sodass eine Spannung der Batterien 3 durch den Aufwärtswandler 1 bis zum Bewegungssensor 2 bzw. zu einem automatisch über den Bewegungssensor betriebenen Schalter (nicht gezeigt) gelangen kann. Sobald der Schalter aufgrund eines entsprechenden Sensorsignals geschlossen wird, fließt Strom zu einer Einschaltlogik 4. Die Einschaltlogik 4 kann einen Transistor enthalten, der geöffnet wird, sobald der Schalter geschlossen ist. Durch das Öffnen des Transistors wird ein Stromfluss durch die Ausschaltlogik und Spannungsregulierung 5 zum Eingang 15 des Aufwärtswandlers 1 ermöglicht, sodass der Wandler 1 aktiviert wird. Wird durch Öffnen des Schalters die Stromzufuhr zum Transistor unterbrochen, so fließt kein Strom mehr und der Aufwärtswandler 1 sowie ein Spannungsteiler werden deaktiviert. Der Schaltkreis befindet sich dann im Standby- oder Ruhezustand.

Ist der Aufwärtswandler 1 aktiviert, so erzeugt er am Ausgang 18 eine höhere Spannung als die von den Batterien 3 gelieferte Eingangsspannung am Anschluss 17. Die Regelung der Ausgangsspannung am Anschluss 18 erfolgt mit Hilfe der Ausschaltlogik und Spannungsregulierung 5, wobei an einem Widerstand (nicht gezeigt), der beispielsweise über den Transistor der Einschaltlogik 4 nach Masse geschaltet ist, ein Spannungsabfall gemessen wird und dem Regeleingang 11 zugeführt wird. Damit wird ermöglicht, dass der Aufwärtswandler einen konstanten Strom ausgibt und die Spannung sich automatisch an die Vorwärtsspannung der LEDs anpasst. Somit wird ermöglicht, dass die LEDs 6 unabhängig von der Eingangsspannung am Eingang 17 immer gleich hell leuchten.

Das Blockschaltbild der Figur 1 zeigt weiterhin eine Niederspannungsregulierung und eine Rückkopplung 7, die zwischen die Anschlüsse 12 und 13 des Aufwärtswandlers 1 geschaltet ist. Die Niederspannungsregulierung und Rückkopplung 7 bewirkt, dass rechtzeitig vor dem Ende der Batterielebensdauer die LEDs 6 zu blinken beginnen, sobald die Spannung der Batterie 3 einen Grenzwert unterschritten hat. Dieser Grenzwert liegt typischerweise bei ungefähr 1,6 V. Die Blinkfunktion wird über einen Kondensator (nicht gezeigt) realisiert, der in der Rückkopplungsschaltung zwischen den Anschlüssen 13 und 12 enthalten ist.

Im Blockschaltbild der Figur 1 sind weiterhin ein Energiespeicher 8, ein Referenzspannungsfilter 9 und ein Tiefpassfilter 10 eingebaut, die zur Siebung bzw. Stabilisierung der vom Aufwärtswandler erzeugten Spannung vorgesehen sind.

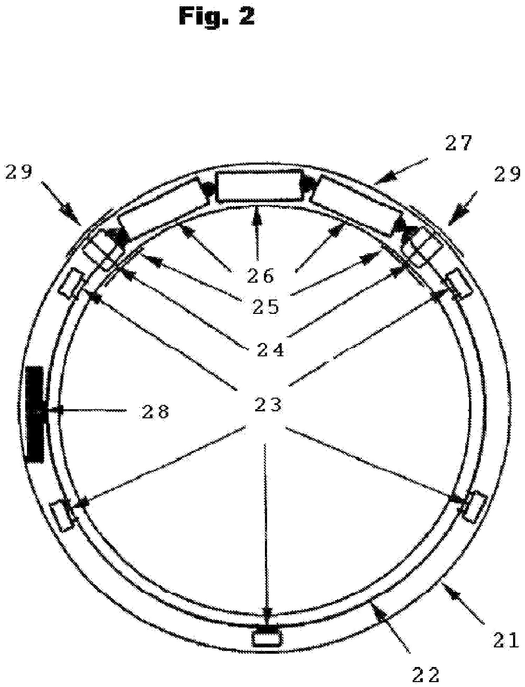

Figur 2 zeigt einen erfindungsgemäßen Leucht- und/oder Signalkörper, der in Form eines Hundehalsrings ausgebildet ist. In Fig. 2 ist eine Schnittansicht durch den Hundehalsring gezeigt, der aus einem ersten Teilring 21 und einem mit dem ersten Teilring 21 durch Steckverbindungen 29 verbindbaren zweiten Teilring 27 gebildet ist.

Die beiden Teilringe 21 und 27 sind jeweils aus einem Schlauch hergestellt, in deren Enden die Verbindungssteckstücke 24 zum gegenseitigen Verbinden der Teilringe 21 und 27 eingesetzt werden können. Teilring 21 ist hierbei insbesondere als transparenter Gewebeschlauch ausgebildet.

Darüber hinaus werden die Teilringe 21 und 27 durch zwei Gummi- bzw. Silikonschläuche 25 verbunden bzw. an den Verbindungsstellen 29 abgedichtet. Die beiden Gummi- bzw. Silikonschläuche 25 weisen einen geringeren Durchmesser als die Teilringe 21 und 27 aus vorzugsweise Gewebeschlauch auf, so dass aufgrund der elastischen Dehnung der Gummi- bzw. Silikonschläuche 25 eine dichtende Anlage der Gummi- bzw. Silikonschläuche 25 an die Teilringe 21 und 27 an den Verbindungsstellen 29 erfolgt.

In dem Teilring 27, der auch als Batterieschlauch oder Batterie-Teilring bezeichnet werden kann, sind mehrere Batterien 26 oder wiederaufladbare Akkumulatoren (Akkus) angeordnet, die der Energieversorgung dienen. Im gezeigten Ausführungsbeispiel der Fig. 2 sind drei Batterien 26 in dem Teilring 27 hintereinander angeordnet.

Im Teilring 21, der auch als LED-Teilring bezeichnet werden kann, befindet sich die elektronische Anordnung des beleuchteten Hundehalsrings der Fig. 2 mit mehreren Leuchtdioden (LED) 23, die über Flachkabel bzw. Flachbandkabel 22 miteinander und mit der Baugruppe 28 sowie den Verbindungsstücken 24 verbunden sind. An den Verbindungsstücken 24 ist das Flachbandkabel 22 mit Batteriekontakten verbunden, die wiederum beim Zusammenstecken des Hundehalsrings aus den Teilringen 21 und 27 in Kontakt mit den Batterien 26 des Batterie-Teilrings 27 gelangen. Vorzugsweise können für die Batteriekontakte auch entsprechende Federelemente gewählt werden, die durch ihre elastische Verformung beim Zusammenstecken eine ausreichende Kontaktierung gewährleisten.

Die Baugruppe 28, die in der Fig. 2 lediglich schematisch dargestellt ist, umfasst die Komponenten des Schaltkreises, welcher in Fig. 1 dargestellt ist.

Der erfindungsgemäße Schaltkreis zum Steuern von Leuchtdioden sowie der Leucht- und/oder Signalkörper ermöglichen somit zusammenfassend eine optimale Ausnutzung der Energie einer Batterie bzw. eines Akkumulators bis zu einer minimalen Spannung von ca. 0,6 V, während herkömmliche Schaltkreise lediglich eine Ausnutzung der Batterie-Spannung bis zur Höhe der LED-Vorwärtsspannung (typ. 2,5 V) ermöglichen. Dabei gewährleistet der Schaltkreis außerdem eine gleichmäßige Helligkeit der LEDs von baugleichen Leucht- und/oder Signalkörpern. Des Weiteren sind auch Energiequellen geeignet, die eine relativ geringe Spannung ausgeben, um eine gleichmäßige konstante Helligkeit der LEDs zu gewährleisten. Letztlich ermöglicht der erfindungsgemäße Schaltkreis und der Leucht- und/oder Signalkörper eine Vermeidung von Leckströmen während des Stand-by- oder Ruhemodus. Die vorliegende Erfindung weist hiermit eine Reihe von Vorteilen gegenüber dem Stand der Technik auf.

## Patentansprüche

1. Schaltkreis zum Ansteuern mindestens einer Leuchtdiode (6) mit einer charakteristischen Vorwärtsspannung, umfassend mindestens eine Energiequelle (3), insbesondere mindestens eine Batterie oder einen Akkumulator, mittels der die Leuchtdiode (6) betreibbar ist, erste Kontakte, an denen die Energiequelle (3) angeschlossen ist, zweite Kontakte, an denen die mindestens eine Leuchtdiode (6) angeschlossen ist, und einen Aufwärtswandler (1),
wobei der Aufwärtswandler (1) so mit den ersten Kontakten und mit den zweiten Kontakten verbunden ist, dass der Aufwärtswandler (1) an einem Ausgang (18) eine höhere Ausgangsspannung als die von der Energiequelle (3) am Anschluss (17) bereitgestellte Eingangsspannung erzeugt, die an die Vorwärtsspannung der mindestens einen Leuchtdiode angepasst ist, wobei der Aufwärtswandler (1) konstanten Strom ausgibt, **dadurch gekennzeichnet, dass**
der Schaltkreis und/oder der Aufwärtswandler (1) eine Vorrichtung zur Detektion einer Unterschreitung eines Grenzwertes der Eingangsspannung aufweist, der wenigstens einen ersten Niederspannungsdetektionskontakt (12) und einen zweiten Niederspannungsdetektionskontakt (13) aufweist;
der Schaltkreis weiterhin eine Schaltungseinheit (7) zur Kenntlichmachung der Unterschreitung des Grenzwertes der Eingangsspannung aufweist, die als Rückkopplung zwischen dem ersten Niederspannungsdetektionskontakt und dem zweiten Niederspannungsdetektionskontakt der Vorrichtung zur Detektion einer Unterschreitung eines Grenzwertes der Eingangsspannung geschaltet ist und über einen Kondensator realisiert ist; und
die Schaltungseinheit (7) zur Kenntlichmachung der Unterschreitung des Grenzwertes der Eingangsspannung so mit den zweiten Kontakten verbunden ist, dass sie bei Unterschreitung des Grenzwertes ein Blinken der Leuchtdiode erzeugt.

2. Schaltkreis nach dem vorhergehenden Anspruch, **dadurch gekennzeichnet, dass** der Schaltkreis weiter einen Widerstand aufweist, der so mit dem Aufwärtswandler (1) verbunden ist, dass die an die Vorwärtsspannung der mindestens einen Leuchtdiode (3) angepasste Ausgangsspannung mit Hilfe der an dem Widerstand abfallenden Spannung regelbar ist.

3. Schaltkreis nach dem vorhergehenden Anspruch, **dadurch gekennzeichnet, dass** der Aufwärtswandler (1) einen Regeleingang (11) aufweist und dass der Widerstand zwischen dem Regeleingang (11) und Masse, insbesondere in Reihe mit den zweiten Kontakten, geschalten ist.

4. Schaltkreis nach dem vorhergehenden Anspruch, **dadurch gekennzeichnet, dass** der Widerstand über einen Transistor nach Masse geschaltet ist.

5. Schaltkreis nach einem der drei vorhergehenden Ansprüche, **dadurch gekennzeichnet, dass**
der Schaltkreis weiterhin mindestens ein Bauteil mit einer bestimmten Vorwärtsspannung, insbesondere ein Halbleiterbauteil mit einer bestimmten Schwellspannung eines Halbleiterübergangs, insbesondere eine Diode, beispielsweise eine oder mehrere Schottky-Dioden oder auch eine Doppelschottky-Diode, aufweist, das zwischen dem Widerstand und dem Aufwärtswandler (1), insbesondere zwischen dem Widerstand und dem Regeleingang (11) des Aufwärtswandlers (1), geschaltet ist.

6. Schaltkreis nach einem der vorhergehenden Ansprüche, **dadurch gekennzeichnet, dass** der Schaltkreis so ausgebildet ist, insbesondere einen Spannungsteiler und einen Transistor aufweist, die so zwischen den ersten Kontakten und dem Aufwärtswandler (1) geschaltet sind, dass im Ruhezustand lediglich ein Ruhestrom des Aufwärtswandlers (1) fließt.

7. Schaltkreis nach einem der vorhergehenden Ansprüche, **dadurch gekennzeichnet, dass** der Schaltkreis als Träger flexible Leiterbahnen aufweist.

8. Leucht- und/oder Signalkörper mit einem Schaltkreis gemäß einem der vorhergehenden Ansprüche.

9. Leucht- und/oder Signalkörper nach dem vorhergehenden Anspruch, **dadurch gekennzeichnet, dass**
der Leucht- und/oder Signalkörper eine Vielzahl an Leuchtdioden (6, 23), insbesondere vier Leuchtdioden, aufweist, die insbesondere alle eine gleiche charakteristische Vorwärtsspannung besitzen.

10. Leucht- und/oder Signalkörper nach einem der beiden vorhergehenden Ansprüche, **dadurch gekennzeichnet, dass**
der Leucht- und/oder Signalkörper eine Hülle (25), insbesondere eine transparente, insbesondere elastische, Hülle, aufweist, die in ihrem Inneren den Schaltkreis aufnimmt, insbesondere feuchtigkeitsdicht umgibt.

11. Leucht- und/oder Signalkörper nach einem der drei vorhergehenden Ansprüche,
**dadurch gekennzeichnet, dass**
die Leuchtdioden (23), der Schaltkreis und die Energiequelle (26) ringförmig, insbesondere als Band, insbesondere als Arm-, Fuß- oder Halsband, ausgebildet sind.

12. Verwendung eines Leucht- und/oder Signalkörpers nach einem der vorhergehenden Ansprüche zur Kennzeichnung eines sich bewegenden Gegenstands oder Lebewesens, insbesondere eines Menschen oder eines Tieres, insbesondere eines Hundes, im Dunklen.

## Claims

1. A circuit for controlling at least one LED (6) with a characteristic forward voltage, comprising at least one energy source (3), in particular at least one battery or at least one accumulator, wherein the LED (6) is operable through the energy source, first contacts to which the energy source (3) is connected, second contacts to which the at least one LED (6) is connected, and a step up converter (1),
wherein the step up converter (1) is connected with the first contacts and with the second contacts so that the step up converter (1) provides an output voltage at an output terminal (18) which is higher than the input voltage at the terminal (19) provided by the energy source (3) which is adapted to the forward voltage of the at least one LED, wherein the step up converter (1) provides constant current,
**characterized in that**
the circuit and/or the step up converter (1) include a device for detecting an undercut of a threshold value of the input voltage, which at least comprises a first low voltage detection contact (12) and a second low voltage detection contact (13);
the circuit additionally includes a circuit unit (7) for identifying the undercut of the threshold value of the input voltage, wherein the circuit unit is implemented as a feedback connected between the first low voltage detection contact and the second low voltage detection contact of the device for detecting an undercut of a threshold value of the input voltage and implemented as a capacitor; and
the circuit unit (7) for identifying the undercut of the threshold value of the input voltage is connected with the second contacts so that it generates a blinking of the LED when the threshold value is undercut.

2. The circuit according to claim 1, wherein the circuit additionally includes a resistor, which is connected with the step up converter (1), so that the output voltage adapted to the forward voltage of the at least one LED (3) is controllable through a voltage dropped at the resistor.

3. The circuit according to any of the previous claims, **characterized in that** the step up converter (1) includes a regulation input (11) and the resistor is connected between the regulation input (11) and ground, in particular in series with the second contacts.

4. The circuit according to any of the previous claims, **characterized in that** the resistor is connected through a transistor to ground.

5. The circuit according to any of the three previous claims, **characterized in that** the circuit includes at least one additional component with a defined forward voltage, in particular a semi-conductor component with a defined threshold voltage of a semi-conductor junction, in particular a diode, e.g. one or plural Schottky diodes, or also a double Schottky diode which is connected between the resistor and the step up converter (1), in particular between the resistor and the regulation input (10) of the step up converter (1).

6. The circuit according to any of the previous claims, **characterized in that** the circuit is configured, so that it includes in particular a voltage divider and a transistor, that are connected between the first contacts and the step up converter (1), so that only a quiescent current of the step up converter (1) flows in standby mode.

7. The circuit according to any of the previous claims, **characterized in that** the circuit includes flexible conductor paths for carriers.

8. A light- and/or signal element including a circuit according to any one of the preceding claims.

9. A light- and/or signal element according to any of the previous claims, **characterized in that** the light- and/or signal element includes a plurality of LEDs (6, 23), in particular four LEDs, wherein in particular all LEDs have identical characteristic forward voltages.

10. A light- and/or signal element according to any of the previous claims, **characterized in that**
the light- and/or signal element includes a shell (25), in particular a transparent, in particular elastic shell, wherein the shell includes the circuit in an interior of the shell, particularly in a moisture proof manner.

11. The light- and/or signal elements according to any of the previous claims, **characterized in that** the LEDs (23), the circuit and the energy source (26) are configured ring-shaped, in particular as a band, in particular a wristband, ankle band or collar.

12. A method of using a light- and/or signal element according to any of the previous claims for identifying a moving object or living being, in particular a human or animal, in particular a dog, in the dark.

## Revendications

1. Circuit destiné à la commande d'au moins une diode luminescente (6) dotée d'une tension directe caractéristique, comprenant au moins une source d'énergie (3), en particulier au moins une pile ou un accumulateur, au moyen de laquelle la diode luminescente (6) peut fonctionner, des premiers contacts, auxquels la source d'énergie (3) est raccordée, des seconds contacts, auxquels l'au moins une diode luminescente (6) est raccordée, et un convertisseur élévateur (1),
le convertisseur élévateur (1) étant raccordé aux premiers contacts et aux seconds contacts de telle manière que le convertisseur élévateur (1) génère sur une sortie (18) une tension de sortie supérieure à la tension d'entrée fournie par la source d'énergie (3) au raccordement (17), qui est adaptée à la tension directe de l'au moins une diode luminescente, le convertisseur élévateur (1) émettant un courant constant, **caractérisé en ce que**
le circuit et/ou le convertisseur élévateur (1) comporte(nt) un dispositif de détection de dépassement négatif d'une valeur limite de tension d'entrée, qui comporte au moins un premier contact de détection de basse tension (12) et un second contact de détection de basse tension (13) ;
le circuit comporte en outre une unité de circuit (7) destinée à signaler le dépassement négatif de la valeur limite de tension d'entrée, qui est branchée en guise de rétrocouplage entre le premier contact de détection de basse tension et le second contact de détection de basse tension du dispositif de détection de dépassement négatif d'une valeur limite de tension d'entrée et qui est réalisée par le biais d'un condensateur ; et
l'unité de circuit (7) destinée à signaler le dépassement négatif de la valeur limite de tension d'entrée est raccordée aux seconds contacts de telle manière qu'elle génère un clignotement de la diode luminescente en cas de dépassement négatif de la valeur limite.

2. Circuit selon la revendication précédente, **caractérisé en ce que** le circuit comporte en outre une résistance, qui est raccordée au convertisseur élévateur (1) de telle manière que la tension de sortie adaptée à la tension directe de l'au moins une diode luminescente (3) peut être réglée à l'aide de la tension chutant au niveau de la résistance.

3. Circuit selon la revendication précédente, **caractérisé en ce que** le convertisseur élévateur (1) comporte une entrée de réglage (11) et **en ce que** la résistance est branchée entre l'entrée de réglage (11) et la masse, en particulier en série avec les seconds contacts.

4. Circuit selon la revendication précédente, **caractérisé en ce que** la résistance est branchée à la masse par le biais d'un transistor.

5. Circuit selon l'une des trois revendications précédentes, **caractérisé en ce que**
le circuit comporte en outre au moins un composant doté d'une tension directe définie, en particulier un composant semi-conducteur doté d'une tension de seuil définie d'une jonction semi-conductrice, en particulier une diode, par exemple une ou plusieurs diodes Schottky ou bien une double diode Schottky, qui est branché entre la résistance et le convertisseur élévateur (1), en particulier entre la résistance et l'entrée de réglage (11) du convertisseur élévateur (1).

6. Circuit selon l'une quelconque des revendications précédentes, **caractérisé en ce que**
le circuit est conçu de telle manière, et comporte en particulier un diviseur de tension et un transistor qui sont branchés de telle manière entre les premiers contacts et le convertisseur élévateur (1), qu'à l'état de repos, seul un courant de repos du convertisseur élévateur (1) circule.

7. Circuit selon l'une quelconque des revendications précédentes, **caractérisé en ce que**
le circuit comporte des pistes conductrices flexibles comme support.

8. Dispositif d'éclairage et/ou de signalisation comprenant un circuit selon l'une quelconque des revendications précédentes.

9. Dispositif d'éclairage et/ou de signalisation selon la revendication précédente, **caractérisé en ce que**
le dispositif d'éclairage et/ou de signalisation comporte une pluralité de diodes luminescentes (6, 23), en particulier quatre diodes luminescentes, qui possèdent toutes en particulier une même tension directe caractéristique.

10. Dispositif d'éclairage et/ou de signalisation selon l'une des deux revendications précédentes, **caractérisé en ce que**
le dispositif d'éclairage et/ou de signalisation comporte une enveloppe (25), en particulier une enveloppe transparente, en particulier élastique, à l'intérieur de laquelle le circuit est reçu et en particulier enveloppé de manière étanche à l'humidité.

11. Dispositif d'éclairage et/ou de signalisation selon l'une des trois revendications précédentes, **caractérisé en ce que**
les diodes luminescentes (23), le circuit et la source d'énergie (26) sont réalisés de forme annulaire, en particulier sous la forme d'une bande, en particulier d'un brassard, d'un bracelet de cheville ou d'un collier.

12. Utilisation d'un dispositif d'éclairage et/ou de signalisation selon l'une quelconque des revendications précédentes, pour signaler un objet ou un être vivant en mouvement, en particulier un être humain ou un animal, en particulier un chien, dans l'obscurité.
